# FASCICULE DE BREVET EUROPEEN

(11) **EP 0 878 034 B1**
(45) Date de publication et mention de la délivrance du brevet: **09.04.2003**
(21) Numéro de dépôt: 97943003.0
(22) Date de dépôt: 26.09.1997
(51) Int. Cl.: H01R 4/64, F16B 3/06

(54) **SYSTEME DE FIXATION D'UNE COSSE DE RACCORDEMENT ELECTRIQUE**
BEFESTIGUNGSSYSTEM FÜR ELEKTRISCHEN VERBINDUNGSSCHUH
SYSTEM FOR FIXING AN ELECTRIC TERMINAL CONNECTOR

(30) Priorité: 26.09.1996 FR 9611723
(43) Date de publication de la demande: 18.11.1998
(73) Titulaire: DUBUIS Société Anonyme, F-41007 Blois Cedex (FR)
(72) Inventeur: COURTOIS, Alain, F-41000 Blois (FR); HUET, Jean-Pierre, F-41000 Blois (FR)
(74) Mandataire: Chambon, Gérard
(86) Numéro de dépôt international: FR9701694
(87) Numéro de publication internationale: WO98013901

(56) Documents cités:
- WO-A-93/09355
- FR-A- 2 580 744
- FR-A- 2 692 632
- US-A- 4 174 148

## Description

L'invention concerne un système de fixation d'une cosse de raccordement électrique, notamment dans l'âme d'un rail de voie ferrée.

Il est connu de fixer un câble sur un rail de voie ferrée, en vue, par exemple, d'assurer un contact de masse et/ou un contact de retour courant, etc. Il est connu par exemple d'effectuer une soudure aluminothermique à l'extrémité du câble ou d'utiliser une cosse fixée à ladite extrémité.

A cet effet, dans ce dernier cas, on fixe ladite cosse sur le rail par vissage, au moyen, par exemple, d'une tige filetée solidaire ou fixée sur ce dernier et d'un écrou, muni d'une rondelle de serrage, et destiné à venir serrer ladite cosse sur ledit rail ou une pièce électriquement conductrice fixée sur ce dernier.

La tige filetée peut être fixée ou rapportée par tout moyen et notamment être constituée par le prolongement d'un insert fixé dans le rail, comme décrit dans le brevet français n° 2 692 632 au nom du même demandeur.

Dans ce cas, l'insert présente une bague à collerette fixée dans un trou ménagé dans le rail, et sur laquelle vient s'appliquer la cosse de raccordement électrique.

Un tel système donne entière satisfaction en usage courant.

Toutefois, une manipulation intempestive du câble relié à la cosse, câble qui est souvent assez rigide, risque d'entraîner une détérioration ou un desserrage de la cosse.

En effet, une rotation du câble et donc de la cosse dans le sens du desserrage entraîne un mouvement similaire de la rondelle et de l'écrou et donc un desserrage de ce dernier, ce qui détériore naturellement le passage du courant par l'augmentation de la résistance électrique qui en résulte.

Or, cette manipulation intempestive peut être provoquée sur un chantier au cours de travaux ou au cours d'une vérification.

En plus des manipulations humaines, les câbles peuvent être accrochés par des outils ou des engins mécanisés de la voie, tels que des bourreuses par exemple.

C'est pourquoi on a cherché à renforcer encore l'indesserrabilité de ce type de fixation, même lors de manipulations du câble.

On a notamment pensé à solidariser en rotation la cosse et la bague au moyen, par exemple, de dentures, mais un tel système présente le risque d'un endommagement important en cas de fortes sollicitations sur le câble.

Dans le même ordre d'idée, le document US-4,174,148-A, bien que destiné à la fixation de petits conducteurs, cherche à augmenter le rendement du serrage en diminuant les frottements des moyens de serrage de façon à immobiliser au mieux le conducteur sur son support. A supposer qu'un tel système soit adaptable aux éléments à fixer selon l'invention, il aurait le même inconvénient que celui précité.

C'est pourquoi les inventeurs ont cherché une fixation qui permette à la cosse au contraire de tourner en cas de manipulation importante du câble, tout en conservant sa bonne conduction électrique. Il est clair toutefois que l'invention, ne concerne pas exclusivement un raccordement sur un rail de voie ferrée, mais bien sûr sur tout élément destiné à recevoir une telle cosse.

Pour atteindre ces buts en apparence contradictoires, l'invention propose donc un système de fixation d'une cosse de raccordement électrique sur un élément tel qu'un rail de voie ferrée, comportant classiquement une tige filetée solidaire ou fixée sur l'élément et un écrou, muni d'une rondelle de serrage, et destiné à venir serrer ladite cosse sur ledit élément ou une pièce électriquement conductrice fixée sur celui-ci, telle qu'une bague à collerette.

Le système selon l'invention est par contre notamment remarquable en ce que les surfaces en regard de la cosse et de la rondelle de serrage sont rendues tournantes l'une relativement à l'autre par au moins un traitement antifriction, sans dévissage dudit écrou. L'invention résout ainsi le problème de façon tout à fait surprenante.

L'écrou est généralement un écrou frein tandis que la rondelle de serrage peut avantageusement, soit être sertie sur l'écrou de manière à rester assujettie audit écrou tout en restant libre en rotation, soit encore être constituée par une embase solidaire de l'écrou.

Dans ce cas, le traitement antifriction est réalisé sur la face de la rondelle de serrage tournée vers la cosse.

Toutefois, il n'est pas toujours possible ou simple de réaliser un revêtement sur la rondelle de serrage.

C'est pourquoi l'invention propose un mode de réalisation qui est remarquable en ce qu'il comporte une rondelle antifriction interposée entre la cosse et la rondelle de serrage, cette rondelle ayant au moins l'une de ses faces traitée antifriction de manière à pouvoir toumer en glissant sur la rondelle de serrage (9a, 9b) et/ou permettre à la cosse (6) de tourner en glissant sur ladite face traitée.

Selon un mode de réalisation particulier, qui évite perte et mauvais montage, la rondelle antifriction est solidarisée avec la rondelle de serrage, sa face traitée anti-friction étant celle qui est opposée à ladite rondelle de serrage.

Ainsi, on comprend que si c'est la face de la rondelle antifriction tournée vers la cosse qui est traitée, la cosse pourra glisser sur ladite rondelle antifriction tandis que cette dernière sera maintenue solidaire en rotation avec la rondelle de serrage de l'écrou, par frottement, et/ou par fixation selon le dernier mode de réalisation mentionné.

Dans le cas inverse où c'est l'autre face qui est traitée, ou encore si la rondelle antifriction est retournée, celle-ci restera solidaire en rotation avec la cosse mais glissera sur la rondelle de serrage.

Dans tous les cas, la rondelle antifriction ne doit pas être interposée du côté opposé à la rondelle de serrage, ce qui rendrait le système inefficace.

Le traitement antifriction est, par exemple, réalisé par un traitement à base de PTFE, voire même si on le juge utile, à base d'un mélange de PTFE et de poudre de plomb, c'est à dire un mélange rendu électriquement conducteur. Dans le cas notamment de la rondelle antifriction supplémentaire, l'alliage même de celle-ci pourrait être de nature antifriction.

L'invention sera bien comprise à la lecture de la description qui va suivre et qui se réfère aux dessins annexés dans lesquels:
- Les figures 1 à 4 montrent en perspective quatre modes de réalisation selon l'invention, avant assemblage des pièces entre elles,
- La figure 5 est une coupe transversale du mode de réalisation de la figure 3, après assemblage des pièces entre elles,
- la figure 6 est une coupe semblable à la figure 5 montrant une variante.

Sur les dessins, on peut voir en partie un rail 1 de voie ferrée dans l'âme duquel est prévu ici un trou cylindrique 2 destiné à recevoir un insert 3. Comme déjà dit toutefois, le rail 1 peut bien sûr être un autre élément (cosse de batterie, ...).

Dans cet exemple, l'insert 3 est constitué par une cheville 4 pourvue d'un prolongement sous forme de tige filetée 4' et par une bague 5 munie d'une collerette 5'.

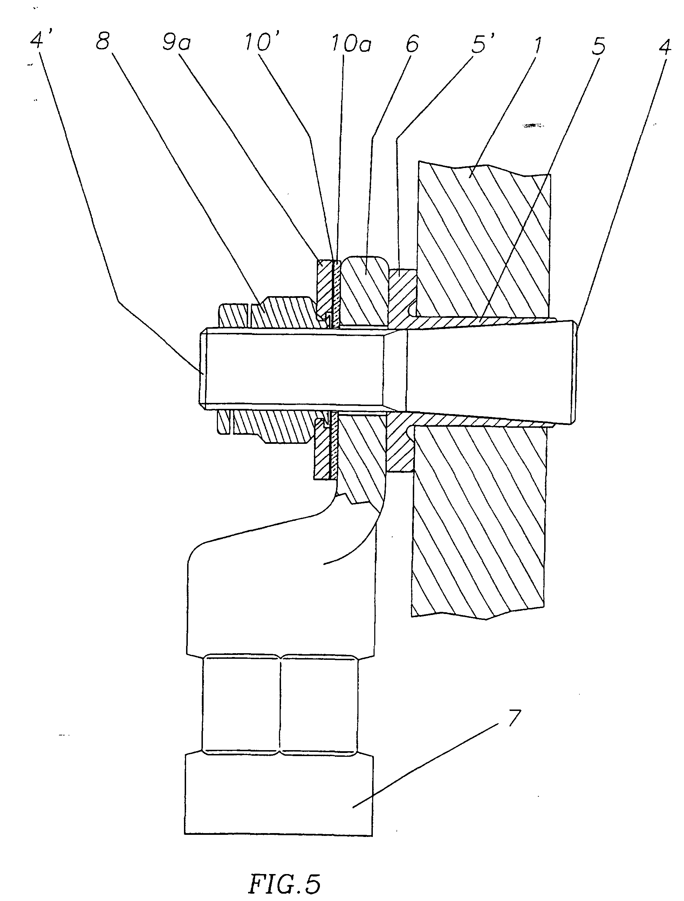

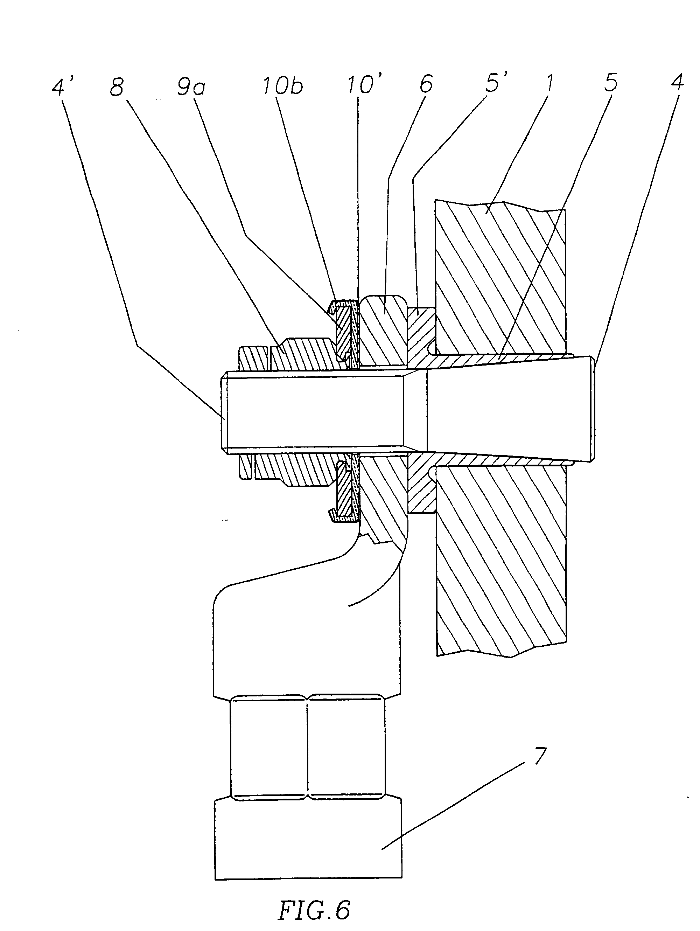

La fixation d'un insert de ce type dans le trou cylindrique 2 est décrit dans le brevet précité FR-2 692 632, la bague 5 étant expansée à force et la collerette 5' venant s'appliquer sur l'âme du rail comme le montrent bien les figures 5 et 6, de telle sorte qu'un contact parfait s'établit entre ladite bague et le rail.

Toutefois, il est clair que cet insert peut être mis en place autrement, la tige filetée 4' pouvant même faire partie intégrante du rail 1 ou être soudée à celui-ci.

La tige filetée 4' est destinée à recevoir une cosse 6 de raccordement électrique, par exemple en cuivre étamé, ladite cosse qui est ici fixée à un câble 7 étant destinée à venir s'appliquer sur la collerette 5' assurant ainsi un excellent contact électrique.

Pour fixer la cosse 6 sur la collerette 5', on utilise un écrou 8 qui vient se visser sur la tige filetée 4'.

L'écrou 8 est de préférence un écrou frein destiné à empêcher ou au moins à limiter le dévissage dudit écrou.

A cet effet, l'écrou présente, par exemple, un filetage intérieur en partie fendu pour assurer un pincement élastique.

En outre, on interpose entre l'écrou 8 et la cosse 6, une rondelle de serrage 9a, 9b.

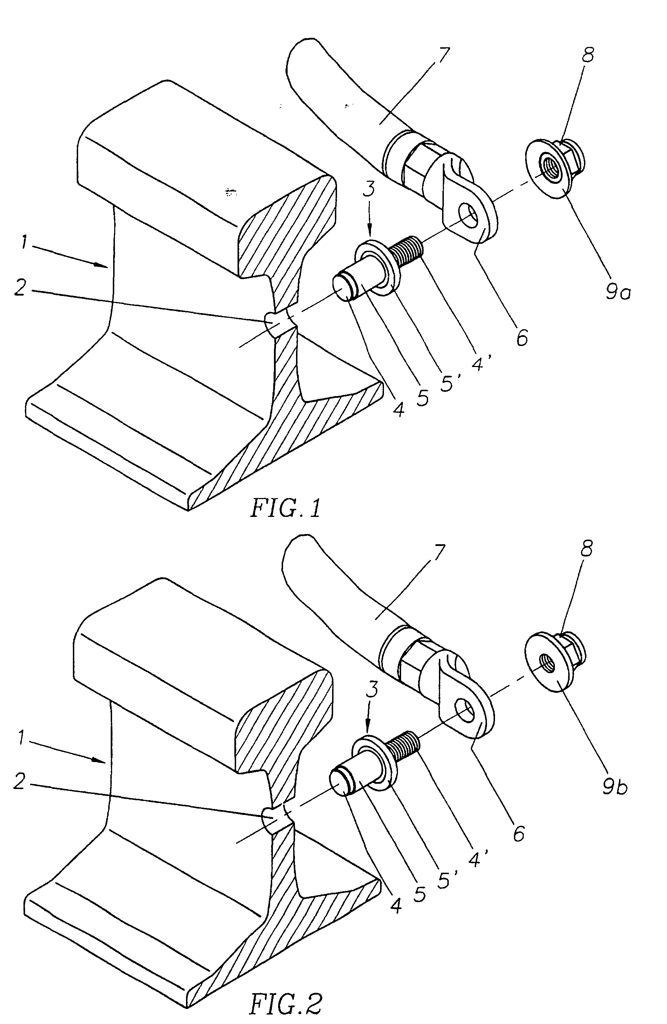

Dans les modes de réalisation des figures 1, 3, 5 et 6, la rondelle de serrage 9a, en acier inoxydable par exemple, est une rondelle élastique qui est en outre ici sertie, c'est-à-dire fixée à l'écrou mais libre en rotation, afin notamment d'éviter son oubli ou sa perte. La rondelle 9a pourrait bien sûr être complètement indépendante de l'écrou.

Dans le mode de réalisation des figures 2 et 4, la rondelle 9b est ici constituée par une embase solidaire de l'écrou 8, mais on comprendra que le résultat est le même.

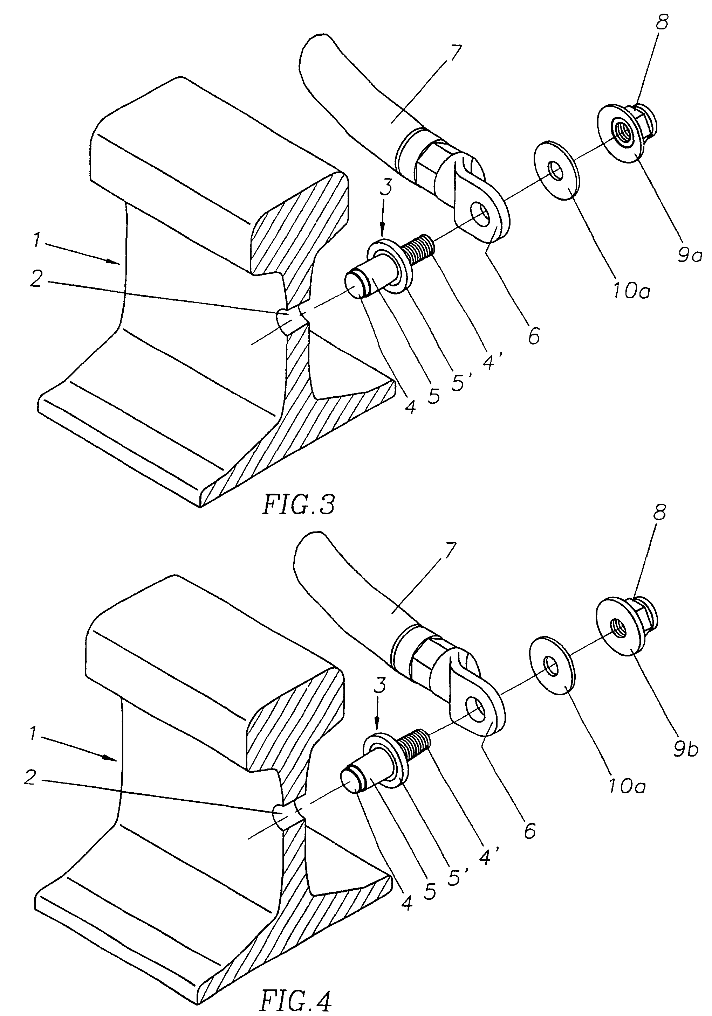

Dans les modes de réalisation des figures 3 à 6 comportant des rondelles de serrage 9a et respectivement 9b (comme d'ailleurs dans les figures 1 et 2), on a prévu en outre, contrairement auxdites figures 1 et 2, une rondelle complémentaire 10a, 10b qui est interposée entre la cosse 6 et ladite rondelle de serrage 9a, 9b.

Dans les modes de réalisation des figures 1 et 2, la face de la rondelle 9a, 9b tournée vers la cosse 6 est traitée antifriction alors que dans les modes de réalisation des figures 3 à 6, c'est au moins l'une des faces de la rondelle complémentaire 10a, 10b, dite antifriction, qui est traitée et par exemple la face tournée vers la rondelle de serrage 9a, 9b (figure 5), ou au contraire la face tournée vers la cosse (figure 6), face qui est schématisée en 10' sur lesdites figures 5 et 6.

Dans le mode de réalisation de la figure 6, outre le fait que la face 10' traitée est tournée vers la cosse, on peut avantageusement dans ce cas, comme le montre ladite figure, solidariser la rondelle 10b à la rondelle de serrage 9a, 9b, par exemple par sertissage sur la rondelle de serrage ou au centre de celle-ci (de la même manière par exemple que ladite bague de serrage sur l'écrou 8), ou encore par collage, pattes rabattues, etc.

De la sorte, non seulement ladite rondelle 10b ne peut pas être omise au cours du montage, mais encore ceci interdit tout mauvais montage tel qu'un positionnement de la rondelle entre la cosse et la collerette 5' de la bague 5, ce qui non seulement supprimerait l'efficacité du système mais en outre augmenterait la résistance électrique. On comprend qu'un tel mode de réalisation revient un peu aux premiers modes décrits dans lesquels c'est la rondelle de serrage 9a, 9b qui est traitée antifriction.

Le traitement antifriction est, par exemple, réalisé par un revêtement de PTFE, éventuellement mélangé de microbilles de plomb. La rondelle 10a, 10b, en bronze par exemple, ainsi revêtue, pourrait aussi être constituée en entier, comme déjà dit, d'un alliage antifriction.

On comprend ainsi qu'après un serrage suffisant de l'écrou, tout mouvement intempestif de la cosse permettra à celle-ci de tourner en glissant soit sur la rondelle de serrage 9a, 9b (figures 1, 2), soit sur la rondelle 10b (figure 6), soit encore indirectement sur la rondelle de serrage par l'intermédiaire et en entraînant la rondelle 10a (figures 3 à 5).

En outre, dans tous les cas, le frottement de la cosse sur la bague ne peut qu'améliorer la planéité des surfaces en contact.

Un traitement sur les deux faces de la rondelle 10a est en outre encore imaginable.

Si on sait faire des fixations par vissage qui sont indesserrables dans la majorité des cas et si en outre on sait également faire des contacts tournants, l'invention réalise deux fonctions qui paraissaient jusqu'à présent inconciliables puisqu'elle permet de conserver un excellent contact électrique par serrage tout en permettant une rotation dans les cas extrêmes, sans risque de nuire audit contact électrique.

En outre, l'invention ne se contente pas d'avoir imaginé l'utilisation d'un traitement antifriction pour un système de fixation, mais il faut encore que ce traitement soit réalisé à certains endroits seulement.

## Revendications

1. Système de fixation d'une cosse (6) de raccordement électrique sur un élément (1) tel qu'un rail de voie ferrée, comportant une tige filetée (4') solidaire ou fixée sur l'élément et un écrou (8), muni d'une rondelle de serrage (9a, 9b), et destiné à venir serrer ladite cosse sur ledit élément ou une pièce électriquement conductrice fixée sur celui-ci, telle qu'une bague (5) à collerette (5'), **caractérisé en ce que** les surfaces en regard de la cosse (6) et de la rondelle de serrage (9a,9b) sont rendues tournantes l'une relativement à l'autre par au moins un traitement antifriction, sans dévissage dudit écrou (8).

2. Système de fixation selon la revendication 1, **caractérisé en ce que** l'écrou (8) est un écrou frein.

3. Système de fixation selon l'une des revendications 1 et 2, **caractérisé en ce que** la rondelle de serrage (9a) est sertie sur l'écrou (8) de manière à rester assujettie audit écrou tout en restant libre en rotation.

4. Système de fixation selon l'une des revendications 1 et 2, **caractérisé en ce que** la rondelle de serrage (9b) est constituée par une embase solidaire de l'écrou (8).

5. Système de fixation selon l'une des revendications 1 à 4, **caractérisé en ce que** le traitement antifriction est réalisé sur la face de la rondelle de serrage (9a, 9b) tournée vers la cosse (6).

6. Système de fixation selon l'une des revendications 1 à 4, **caractérisé en ce qu'**il comporte une rondelle antifriction (10a,10b) interposée entre la cosse (6) et la rondelle de serrage (9a, 9b), cette rondelle ayant au moins l'une de ses faces (10') traitée antifriction de manière à pouvoir tourner en glissant sur la rondelle de serrage (9a, 9b) et/ou permettre à la cosse (6) de tourner en glissant sur ladite face traitée.

7. Système de fixation selon la revendication 6, **caractérisé en ce que** la rondelle antifriction (10b) est solidarisée avec la rondelle de serrage (9a,9b), sa face (10') traitée antifriction étant celle qui est opposée à ladite rondelle de serrage.

8. Système de fixation selon l'une des revendications 1 à 7, **caractérisé en ce que** le traitement antifriction est réalisé par un revêtement à base de PTFE.

9. Système de fixation selon la revendication 8, **caractérisé en ce que** le revêtement est à base d'un mélange de PTFE et de poudre de plomb.

## Claims

1. System for fixing an electrical connecting terminal (6) to an element (1) such as a railway rail, comprising a threaded rod (4') integral with or fixed to the element and a nut (8) provided with a clamping washer (9a, 9b) and designed to clamp said terminal to said element or an electrically conducting part fixed to the latter, such as a ring (5) with a collar (5'), **characterised in that** the facing surfaces of the terminal (6) and the clamping washer (9a, 9b) are made able to turn one in relation to the other by at least one anti-friction treatment without unscrewing said nut (8).

2. Fixing system according to claim 1, **characterised in that** the nut (8) is a lock nut.

3. Fixing system according to one of claims 1 and 2, **characterised in that** the clamping washer (9b) is crimped to the nut (8) so as to remain tied to said nut while remaining free to rotate.

4. Fixing system according to one of claims 1 and 2, **characterised in that** the clamping washer (9b) is constituted by a base forming an integral part of the nut (8).

5. Fixing system according to one of claims 1 to 4, **characterised in that** the anti-friction treatment is carried out on the face of the clamping washer (9a, 9b) turned towards the terminal (6).

6. Fixing system according to one of claims 1 to 4, **characterised in that** it comprises an anti-friction washer (10a, 10b) interposed between the terminal (6) and the clamping washer (9a, 9b), this washer having at least one of its faces (10') subjected to an anti-friction treatment so as to be able to turn by sliding on the clamping washer (9a, 9b) and/or allow the terminal (6) to turn by sliding on said treated face.

7. Fixing system according to claim 6, **characterised in that** the anti-friction washer (10b) is locked to the clamping washer (9a, 9b), its face (10') subjected to the anti-friction treatment being the one opposite said clamping washer.

8. Fixing system according to one of claims 1 to 7, **characterised in that** the anti-friction treatment is effected by a covering based on PTFE.

9. Fixing system according to claim 8, **characterised in that** the covering is based on a mixture of PTFE and lead powder.

## Patentansprüche

1. Befestigungssystem für einen elektrischen Verbindungsschuh (6) auf einem Bauteil (1) wie einer Eisenbahnschiene, umfassend eine Gewindestange (4'), einstückig mit oder befestigt auf dem Bauteil, und eine mit einer Klemmscheibe (9a, 9b) versehene Mutter (8), die dazu bestimmt ist, diesen Schuh auf dem Bauteil oder einem elektrisch leitfähigen Teil, wie einem Ring (5) mit einem Kragen (5'), festzuklemmen, **dadurch gekennzeichnet, dass** die sich gegenüberstehenden Oberflächen des Schuhs (6) und der Klemmscheibe (9a, 9b) zumindest durch eine reibungsmindernde Behandlung gegeneinander drehbar sind, ohne dass diese Mutter (8) losgeschraubt wird.

2. Befestigungssystem nach Anspruch 1, **dadurch gekennzeichnet, dass** diese Mutter (8) eine sichernde Mutter ist.

3. Befestigungssystem nach einem der Ansprüche 1 oder 2, **dadurch gekennzeichnet, dass** die Klemmscheibe (9a) auf die Mutter (8) gefalzt ist, um auf der Mutter befestigt zu bleiben, obwohl sie frei drehbar bleibt.

4. Befestigungssystem nach einem der Ansprüche 1 oder 2, **dadurch gekennzeichnet, dass** die Klemmscheibe (9b) durch einen mit der Mutter (8) einstückigen Ansatz gebildet ist.

5. Befestigungssystem nach einem der Ansprüche 1 bis 4, **dadurch gekennzeichnet, dass** die reibungsmindernde Behandlung auf der zum Schuh gewandten Fläche der Klemmscheibe durchgeführt ist.

6. Befestigungssystem nach einem der Ansprüche 1 bis 4, **dadurch gekennzeichnet, dass** es eine reibungsmindernde Scheibe (10a, 10b) beinhaltet, die zwischen dem Schuh (6) und der Klemmscheibe (9a, 9b) eingesetzt ist, wobei diese Scheibe mindestens eine reibungsmindernd behandelte Fläche (10') aufweist, so dass sie sich gleitend auf der Klemmscheibe (9a, 9b) drehen kann und/oder den Schuh (6) gleitend auf dieser behandelten Fläche sich drehen lässt.

7. Befestigungssystem nach Anspruch 6, **dadurch gekennzeichnet, dass** die reibungsmindernde Scheibe (10b) mit der Klemmscheibe (9a, 9b) verbunden ist, wobei ihre reibungsmindernd behandelte Fläche (10') diejenige ist, die der Klemmscheibe gegenüberliegt.

8. Befestigungssystem nach einem der Ansprüche 1 bis 7, **dadurch gekennzeichnet, dass** die reibungsmindernde Behandlung durch eine Beschichtung auf der Basis von PTFE durchgeführt ist.

9. Befestigungssystem nach Anspruch 8, **dadurch gekennzeichnet, dass** die Beschichtung auf einer Mischung von PTFE und Bleipulver basiert.
